# EUROPÄISCHE PATENTSCHRIFT

(11) **EP 1 349 886 B1**
(45) Veröffentlichungstag und Bekanntmachung des Hinweises auf die Patenterteilung: **15.08.2007**
(21) Anmeldenummer: 01989503.6
(22) Anmeldetag: 22.11.2001
(51) Int. Cl.: C08G 69/00, C08G 69/16, C08G 69/38, C08G 69/04, C08G 69/28

(54) **POLYAMID**
POLYAMIDE
POLYAMIDE

(30) Priorität: 23.11.2000 DE 10058292
(43) Veröffentlichungstag der Anmeldung: 08.10.2003
(73) Patentinhaber: BASF Aktiengesellschaft, 67056 Ludwigshafen (DE)
(72) Erfinder: WINTERLING, Helmut, 67061 Ludwigshafen (DE); FISCHER, Michael, 67071 Ludwigshafen (DE)
(86) Internationale Anmeldenummer: PCT/EP2001/013595
(87) Internationale Veröffentlichungsnummer: WO 2002/042357

(56) Entgegenhaltungen:
- EP-A- 0 800 548
- WO-A-97/13800
- WO-A-99/46323

## Beschreibung

Die vorliegende Erfindung betrifft ein Verfahren zur Herstellung von Polyamiden, dadurch gekennzeichnet, daß man die Polymerisation von Startmonomeren in der Gegenwart von 2,3 bis 10 mmol , bezogen auf 1 mol Carboxamid-Gruppe des Polyamids, einer Verbindung, die eine Nitrilgruppe und eine zur Bildung einer Carboxamidgruppe fähige funktionelle Gruppe aufweist, als Kettenregler durchführt.

Ferner betrifft sie ein nach diesem Verfahren erhältliches, insbesondere erhaltenes Polyamid, weiterhin Polyamid, enthaltend eine über eine Carboxamidgruppe chemisch an die Polymerkette gebundene Verbindung, die eine Nitrilgruppe und eine zur Bildung einer Carboxamidgruppe fähige funktionelle Gruppe aufweist, in einer Menge im Bereich von 2,3 bis 10 mmol, bezogen auf 1 mol Carboxamid-Gruppen des Polyamids, sowie Fäden, Fasern, Flächengebilde und Formkörper enthaltend ein solches Polyamid, insbesondere bestehend aus einem solchen Polyamid.

Aus der WO-A-99/46323 ist die Herstellung von Polyamiden durch Einsatz von aliphatischen Dicarbonsäuren als Kettenregler bekannt.

Polyamide stellen technisch bedeutsame thermoplastische Polymere dar, die üblicherweise in geschmolzenem Zustand, beispielsweise durch Extrusion oder Spritzguß, zu Fäden, Fasern, Flächengebilden und Formkörpern verarbeitet werden.

Bei dieser Verarbeitung im geschmolzenen Zustand ist es erforderlich, daß das Polymer eine hohe Schmelzstabilität aufweist. Veränderungen des Polymers infolge der thermischen Belastung im geschmolzenen Zustand werden üblicherweise als Viskositätsänderung der Schmelze gemäß der Norm DIN EN ISO 1133 bestimmt. Solche Viskositätsänderungen der Schmelze können sowohl Ausdruck einer Degradation des Polymers, wie auch einer Nachkondensation sein.

Zudem sollten die aus solchen Polymeren erhältlichen Fäden, Fasern, Folien und Flächengebilde eine hohe Stabilität gegenüber thermischen Belastungen unterhalb des Schmelzpunktes aufweisen. Als Meßgröße wird hierzu in üblicher Weise die Kerbschlagzähigkeit nach Warmlagerung gemäß der Norm DIN EN ISO 179 herangezogen.

Zur Stabilisierung des Polyamids hinsichtlich einer Viskositätsänderung der Schmelze, wie auch hinsichtlich einer thermischen Belastung unterhalb des Schmelzpunktes von aus solchen Polyamiden hergestellten Produkten werden üblicherweise vor oder während der Polymerisation aus den Startmonomeren Kettenregler, beispielsweise-Propionsäure, zugegeben, wobei eine weitere Verbesserung dieser Stabilisierung wünschenswert ist.

Der vorliegenden Erfindung lag die Aufgabe zugrunde, Polyamide mit verbesserter Schmelzstabilität und verbesserter Schlagzähigkeit nach Warmbehandlung sowie ein Verfahren zur Herstellung solcher Polyamide, zur Verfügung zu stellen.

Demgemäß wurden die eingangs definierten Polyamide, Verfahren zur Herstellung solcher Polyamide, sowie Fäden, Fasern, Flächengebilde und Formkörper enthaltend ein solches Polyamid, insbesondere bestehend aus einem solchen Polyamid gefunden.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX^{®}, US-A-3,287,324) oder Poly-paraphenylen-terephthalamid (KEVLAR^{®}, US-A-3,671,542)

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren oder deren Derivaten, wie Aminocarbonsäurehitrilen, Aminocarbonsäureamiden, Aminocarbonsäureestern oder Aminocarbonsäuresalzen, reagieren die Amino- und Carboxyl-Endgruppen miteinander unter Bildung einer Amid-Gruppe und Wasser. Das Wasser kann anschließend oder gleichzeitig von der Polymermasse entfernt werden. Bei der Polymerisation aus Carbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend oder gleichzeitig von der Polymermasse entfernt werden. Diese Polymerisationsreaktion bezeichnet man üblicherweise als Polykondensation.

Die Polymerisation aus Lactamen als Ausgangsmonomeren oder Ausgangsoligomeren bezeichnet man üblicherweise als Polyaddition.

Als Startmonomere können Verbindungen ausgewählt aus der Gruppe bestehend aus Lactamen, omega-Aminocarbonsäuren, omega-Aminocarbonsäureamiden, omega-Aminocarbonsäuresalze, omega-Aminocarbonsäureester, äquimolaren Mischungen aus Diaminen und Dicarbonsäuren, Dicarbonsäure/Diamin-Salzen oder Gemischen solcher Monomere eingesetzt werden.

### Als Startmonomere kommen

Monomere oder Oligomere eines C₂ - bis C₂₀ - vorzugsweise C₂ - bis C₁₈ - arylaliphatischen oder vorzugsweise aliphatischen Lactams , wie Enantholactam, Undecanolactam, Dodecanolactam oder Caprolactam, insbesondere Caprolactam,

Monomere oder Oligomere von C₂ - bis C₂₀ -, vorzugsweise C₃ - bis C₁₈ - Aminocarbonsäuren, wie 6-Aminocapronsäure, 11-Aminoundecansäure, sowie deren Dimere, Trimere, Tetramere, Pentamere oder Hexamere, sowie deren Salze, wie Alkalisalze, beispielsweise Lithium-, Natrium-, Kalium-Salze,

Monomere oder Oligomere von C₂ - bis C₂₀ - Aminosäureamiden, wie 6-Aminocapronsäureamid, 11-Aminoundecansäureamid sowie deren Dimere, Trimere, Tetramere, Pentamere oder Hexamere,

Ester, vorzugsweise C₁-C₄-Alkylester, wie Methyl-, Ethyl-, n-Propyl-, i-Propyl-, n-Butyl-, i-Butyl-, s-Butyl-ester, von C₂ - bis C₂₀ -, vorzugsweise C₃ - bis C₁₈ - Aminocarbonsäuren, wie 6-Aminocapronsäureester, beispielsweise 6-Aminocapronsäuremethylester, 11-Aminoundecansäureester, beispielsweise 11-Aminoundecansäuremethylester,

Monomere oder Oligomere eines C₂ - bis C₂₀ -, vorzugsweise C₂ -bis C₁₂ - Alkyldiamins, wie Tetramethylendiamin oder vorzugsweise Hexamethylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
sowie deren Dimere, Trimere, Tetramere, Pentamere oder Hexamere, sowie deren Dimere, Trimere, Tetramere, Pentamere oder Hexamere,

Monomere oder Oligomere eines C₇ - bis C₂₀ -, vorzugsweise C₈ -bis C₁₈ - arylaliphatischen Diamins, wie m- oder p-Xylylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
sowie deren Dimere, Trimere, Tetramere, Pentamere oder Hexamere,

Monomere oder Oligomere eines C₇ - bis C₂₀ -, vorzugsweise C₈ -bis C₁₈ - arylaliphatischen Diamins, wie m- oder p-Xylylendiamin,
mit einer C₆ - bis C₂₀ -, vorzugsweise C₆ - bis C₁₀ - aromatischen Dicarbonsäure oder deren Derivate beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,

Monomere oder Oligomere eines C₇ - bis C₂₀ -, vorzugsweise C₈ -bis C₁₈ - arylaliphatischen Diamins, wie m- oder p-Xylylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
sowie Homopolymere, Copolymere, Mischungen und Pfropfungen solcher Ausgangsmonomere oder Ausgangsoligomere in Betracht.

Bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 7, Nylon 11, Nylon 12 und den Aramiden Poly-metaphenylen-isophthalamid oder Poly-paraphenylen-terephthalamid, insbesondere zu Nylon 6 und Nylon 66, führen, wie Caprolactam, Adipinsäure und Hexamethylendiamin.

Lactame können durch Umsetzung eines cyclischen Ketons mit Hydroxylamin zu dem entsprechenden Oxim und anschließende Beckmann-Umlagerung erhalten werden oder aus den entsprechenden Aminonitrilen durch hydrolytische Cyclisierung vor oder während der Polymerisation, insbesondere in Gegenwart von Katalysatoren, wie Titandioxid, in an sich bekannter Weise erhalten werden.

Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,

Monomere oder Oligomere eines C₂ - bis C₂₀ -, vorzugsweise C₂ -bis C₁₂ - Alkyldiamins, wie Tetramethylendiamin oder vorzugsweise Hexamethylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,

Monomere oder Oligomere eines C₆- bis C₂₀ -, vorzugsweise C₆ -bis C₁₀ - aromatischen Diamins, wie m- oder p-Phenylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
sowie deren Dimere, Trimere, Tetramere, Pentamere oder Hexamere,

Monomere oder Oligomere eines C₆ - bis C₂₀ - vorzugsweise C₆ - bis C₁₀ - aromatischen Diamins, wie m- oder p-Phenylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,

Monomere oder Oligomere eines C₆ - bis C₂₀ - vorzugsweise C₆ - bis C₁₀ - aromatischen Diamins, wie m- oder p-Phenylendiamin,
mit einer C₉ - bis C₂₀ -, vorzugsweise C₉ - bis C₁₈ - arylaliphatischen Dicarbonsäure öder deren Derivate, beispielsweise Chloride, wie o-, m- oder p-Phenylendiessigsäure,

Die Herstellung von omega-Aminocarbonsäuren, omega-Aminocarbonsäureamiden, omega-Aminocarbonsäuresalze, omega-Aminocarbonsäureester ist an sich bekannt. Sie können beispielsweise aus den entsprechenden Aminonitrilen vor oder während der Polymerisation erhalten werden.

Die Herstellung von Dicarbonsäuren ist an sich bekannt. Sie können beispielsweise aus den entsprechenden Dinitrilen vor oder während der Polymerisation erhalten werden.

Die Herstellung von Diaminen kann in an sich bekannter Weise, wie durch Hydrierung der entsprechenden Dinitrile, erfolgen.

Erfindungsgemäß führt man die Polymerisation von Startmonomeren in der Gegenwart einer Verbindung, die eine Nitrilgruppe und eine zur Bildung einer Carboxamidgruppe fähige funktionelle Gruppe aufweist, als Kettenregler durch.

Es können auch Gemische solcher Verbindungen eingesetzt werden.

In einer bevorzugten Ausführungsform kommt als zur Bildung einer Carboxamidgruppe fähige funktionelle Gruppe eine Amingruppe in Betracht.

Vorteilhaft können aromatische, arylaliphatische, vorzugsweise aliphatische Aminonitrile, insbesondere aliphatische alpha, omega-Aminonitrile, mit 2 bis 20, vorzugsweise 2 bis 12 Kohlenstoffatomen eingesetzt werden. Besonders bevorzugt sind solche Aminonitrile, deren Kohlenstoffgerüst einem Startmonomer des erfindungsgemäßen Polyamids entspricht, vorzugsweise im Falle von zur Herstellung von Nylon 6 oder Nylon 66, insbesondere Nylon 6, bereits genannten Startmonomeren 6-Aminocapronitril.

Die Herstellung solcher Aminonitrile kann in an sich bekannter Weise erfolgen, wie durch partielle Hydrierung der entsprechenden Dinitrile.

In einer weiteren bevorzugten Ausführungsform kommt als zur Bildung einer Carboxamidgruppe fähige funktionelle Gruppe eine Säuregruppe in Betracht.

Vorteilhaft können aromatische, arylaliphatische, vorzugsweise aliphatische Nitrilocarbonsäuren, insbesondere aliphatische alpha, omega-Nitrilocarbonsäuren, mit 2 bis 20, vorzugsweise 2 bis 12 Kohlenstoffatomen eingesetzt werden. Besonders bevorzugt sind solche Nitrilocarbonsäuren, deren Kohlenstoffgerüst einem Startmonomer des erfindungsgemäßen Polyamids entspricht, vorzugsweise im Falle von zur Herstellung von Nylon 6 oder Nylon 66, insbesondere Nylon 66, bereits genannten Startmonomeren 6-Nitriloadipinsäure.

Die Herstellung solcher Nitrilocarbonsäuren kann in an sich bekannter Weise erfolgen, wie durch partielle Hydrolyse der entsprechenden Dinitrile.

Erfindungsgemäß führt man die Polymerisation von Startmonomeren in der Gegenwart von mindestens 2,3 mmol, vorzugsweise mindestens 2,4 mmol, insbesondere mindestens 2,8 mmol, besonders bevorzugt mindestens 3 mmol, bezogen auf 1 mol Carboxamid-Gruppe des Polyamids, einer Verbindung,-die eine Nitrilgruppe und eine zur Bildung einer Carboxamidgruppe fähige funktionelle Gruppe aufweist, als Kettenregler durch.

Erfindungsgemäß führt man die Polymerisation von Startmonomeren in der Gegenwart von höchstens 10 mmol, vorzugsweise höchstens 6 mmol, insbesondere höchstens 4 mmol, bezogen auf 1 mol Carboxamid-Gruppe des Polyamids, einer Verbindung, die eine Nitrilgruppe und eine zur Bildung einer Carboxamidgruppe fähige funktionelle Gruppe aufweist, als Kettenregler durch.

Setzt man die Verbindung, die eine Nitrilgruppe und eine zur Bildung einer Carboxamidgruppe fähige funktionelle Gruppe aufweist, in geringeren Mengen ein, so ist keine ausreichende Stabilisierung des Polyamids zu beobachten. Setzt man die Verbindung, die eine Nitrilgruppe und eine zur Bildung einer Carboxamidgruppe fähige funktionelle Gruppe aufweist, in größeren Mengen ein, so wird kein ausreichender Grad an Polymerisation erreicht.

Die erfindungsgemäß als Kettenregler eingesetzte Verbindung, die eine Nitrilgruppe und eine zur Bildung einer Carboxamidgruppe fähige funktionelle Gruppe aufweist, kann in Kombination mit an sich bekannten Kettenreglern, beispielsweise Monocarbonsäuren, vorzugsweise C₁-C₁₀-Alkanmonocarbonsäuren, wie Essigsäure oder Propionsäure, vorzugsweise C₅-C₈-Cycloalkanmonocarbonsäuren, wie Cyclopentancarbonsäure, Cyclohexancarbonsäure, vorzugsweise Benzol- und Naphtathalinmonocarbonsäuren, wie Benzoesäure, Naphthalincarbonsäure, beispielsweise Dicarbonsäuren, vorzugsweise C₂-C₁₀-Alkandicarbonsäuren, wie Adipinsäure, Azelainsäure, Sebacinsäure oder Decandicarbonsäure, vorzugsweise C₅-C₈-Cycloalkandicarbonsäuren, wie 1,4-Cyclohexancarbonsäure, vorzugsweise Benzol- und Naphtathalindicarbonsäuren, wie Isophthalsäure, Terephthalsäure, 2,6-Naphthalindicarbonsäure, beispielsweise Monoamine, vorzugsweise C₁-C₁₀-Alkanmonoamine, vorzugsweise C₅-C₈-Cycloalkanmonoamine, wie Cyclopentanamin, Cyclohexanamin, 4-Amino-2,2,6,6-Tetramethylpiperidin, beispielsweise Benzol- und Naphtathalinmonoamin, wie Anilin, Naphthalinamin, beispielsweise Diamine, vorzugsweise C₂-C₁₀-Alkandiamine, wie Hexamethylendiamin, vorzugsweise C₅-C₈-Cycloalkandiamine, wie 1,4-Cyclohexandiamin, vorzugsweise Benzol-, Naphtathalin- und Xylylidendiamine, wie o-Xylylydendiamin, m-Xylylydendiamin, p-Xylylidendiamin, oder Gemische solcher an sich bekannter Kettenregler eingesetzt werden.

Die Summe aus der erfindungsgemäß'eingesetzten Verbindung, die eine Nitrilgruppe und eine zur Bildung einer Carboxamidgruppe fähige funktionelle Gruppe aufweist, und dem an sich bekannten Kettenregler sollte vorteilhaft die für die erfindungsgemäß eingesetzte Verbindung, die eine Nitrilgruppe und eine zur Bildung einer Carboxamidgruppe fähige funktionelle Gruppe aufweist, gemäß vorliegender Erfindung definierte Höchstmenge nicht übersteigen, da ansonsten kein ausreichender Grad an Polymerisation erreicht wird.

In einer anderen bevorzugten Ausgestaltung wird die Polymerisation bzw. Polykondensation nach dem erfindungsgemäßen Verfahren in Gegenwart mindestens eines Pigments durchgeführt. Bevorzugte Pigmente sind Titandioxid, wobei Titandioxid vorzugsweise in der Anatas-Modifikation vorliegt, oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden.

Die Herstellung der erfindungsgemäßen Polyamide kann in einer Weise ausgeführt werden, wie sie zur Polyamiden an sich bekannt ist. So kann beispielsweise die Herstellung eines auf Caprolactam basierenden Polyamids in Gegenwart einer Verbindung, die eine Nitrilgruppe und eine zur Bildung einer Carboxamidgruppe fähige funktionelle Gruppe aufweist, gemäß den in DE-A 14 95 198, DE-A 25 58 480, DE-A 44 13 177, Polymerization Processes, Interscience, New York, 1977, S. 424-467 und Handbuch der Technischen Polymerchemie, VCH Verlagsgesellschaft, Weinheim, 1993, S. 546-554 beschriebenen kontinuierlichen oder diskontinuierlichen Verfahren erfolgen. Die Herstellung eines auf Adipinsäure/Hexamethylendiamin basierenden Polyamids in Gegenwart einer Verbindung, die eine Nitrilgruppe und eine zur Bildung einer Carboxamidgruppe fähige funktionelle Gruppe aufweist, kann beispielsweise in einem an sich bekannten diskontinuierlichen Verfahren, wie es beispielsweise in Polymerisation Processes, Interscience, New York, 1977, Seite 424-467, insbesondere Seite 444-446, beschrieben ist, oder in einem kontinuierlichen Verfahren, beispielsweise gemäß EP 129 196, erfolgen. Die Zugabe einer Verbindung, die eine Nitrilgruppe und eine zur Bildung einer Carboxamidgruppe fähige funktionelle Gruppe aufweist, in den Reaktor kann getrennt oder im Gemisch mit den gesamten oder einem Teil der Startmonomeren erfolgen.

Aus den erfindungsgemäßen Polyamiden können Fäden, Fasern, Flächengebilde oder Formkörper hergestellt werden.

Im Falle von Fäden und Fasern sind dabei solche bevorzugt, die auf Nylon 6 oder Nylon 66, insbesondere Nylon 6, basieren und die durch Schnellspinnen, also durch Abzugsgeschwindigkeiten von mehr als 4000 m/min erhalten wurden.

Vor der Herstellung von Flächengebilden oder Formkörpern können dem erfindungsgemäßen Polyamid an sich übliche Zusatzstoffe, wie Flammschutzmittel, Glasfasern, in an sich bekannter weise, wie durch Extrusion, beigemischt werden.

### Beispiele

### Beispiel 1:

In einem Autoklaven wurden 3000 g (26,5 mol) Caprolactam, 450 g vollentsalztem Wasser und 7,3 g (65 mmol) 6-Aminocapronitril unter Stickstoff-Atmosphäre auf eine Innentemperatur von 270°C aufgeheizt, direkt im Anschluss innerhalb einer Stunde auf Normaldruck entspannt und 15 min nachkondensiert und ausgefahren.

Das ausgefahrene Polyamid wurde granuliert, mit kochendem Wasser zur Entfernung von Caprolactam und Oligomeren extrahiert, anschließend im Vakuumtrockenschrank getrocknet. Das getrocknete extrahierte Granulat wurde in der festen Phase bei 160°C über 25 h getempert.

Im Anschluss wurde die relative Lösungsviskosität des Polyamids in 96%-Schwefelsäure gemessen. Hierbei wurde 1 g Polymer auf 100 ml Lösung eingewogen und die Durchlaufzeit in einem Ubbelohde-Viskosimeter gegen das reine Lösungsmittel gemessen. Der vollständige Einbau der Nitrilgruppen wurde IR-spektroskopisch überprüft.

Die relative Lösungsviskosität RV(1,0 g/dl) betrug 2,73.

### Vergleichsbeispiel 1

Es wurde wie in Beispiel 1 verfahren mit der Ausnahme, daß anstelle von 7,3 g 6-Aminocapronitril 4,8 g (65 mmol) Propionsäure eingesetzt wurden.

Die relative Lösungsviskosität RV(1,0 g/dl) betrug 2,71.

### Beispiel 2

Die gemäß Beispiel 1 und Vergleichsbeispiel 1 hergestellten Polymere wurden gemäß ISO 1133 hinsichtlich ihres Fließverhaltens untersucht.

Hierzu wurde geschmolzenes Polymer für 4, 8, 12, 16, 20 min in einem beheizten Zylinders bei einer Temperatur von 275°C gehalten und anschließend unter einer Gewichtskraft von 5 kg durch eine. Düse in den freien Raum gedrückt.

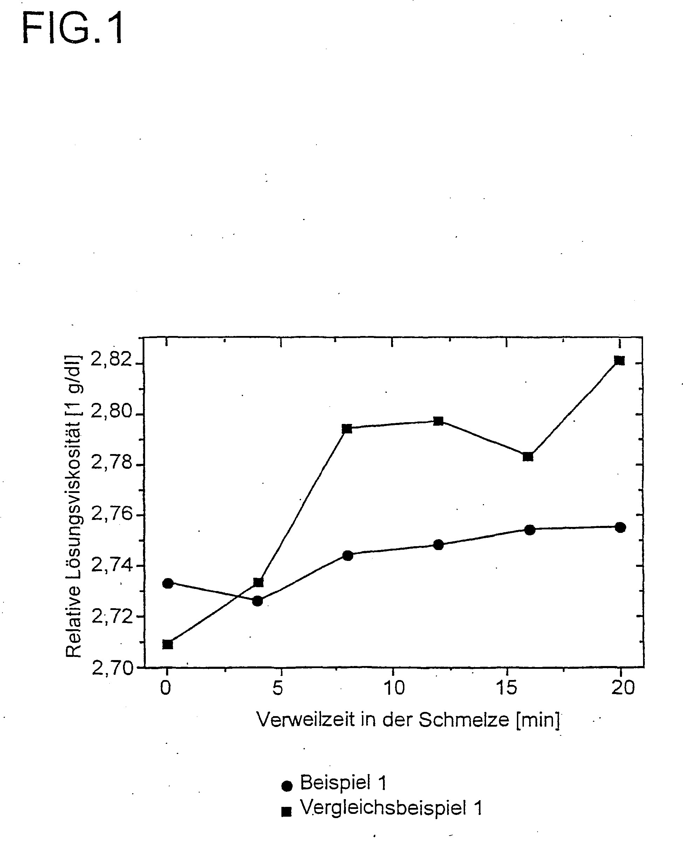

von den hierbei erhaltenen Strängen wurde die relative Lösungsviskosität gemäß Beispiel 1 bestimmt. Abbildung 1 zeigt das Ergebnis.

Aus Abbildung 1 ist ersichtlich, daß das Polymer gemäß Vergleichsbeispiel 1 eine starke Änderung der Lösungsviskosität aufweist, während die Lösungsviskosität des Polymers gemäß Beispiel 1 praktisch konstant bleibt.

Eine Änderung der Lösungsviskosität bedeutet, daß eine Degradationen bzw. ein Molekulargewichtsaufbau in der Schmelze vor dem Herausdrücken aus dem Zylinder eingetreten ist. Je höher die Lösungsviskosität des extrudierten Stranges ist, desto stärker war der Molekulargewichtsaufbau. Dies wirkt sich negativ auf die Verarbeitungseigenschaften aus.

### Beispiel 3

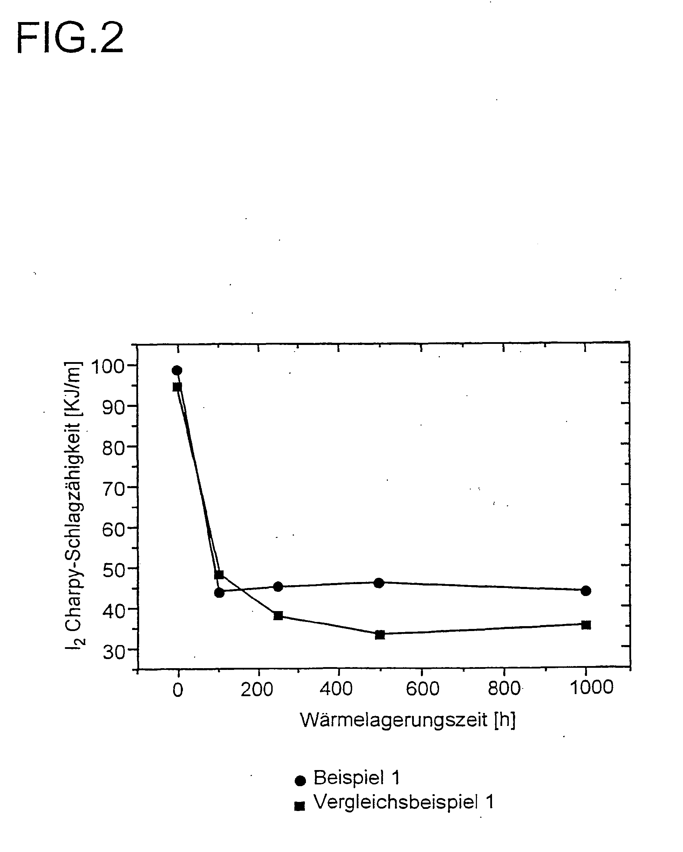

In die gemäß Beispiel 1 und Vergleichsbeispiel 1 hergestellten Polymere wurden 30% Glasfasern eingearbeitet und die Polymere einer Wärmelagerung im Umluftofen bei 140°C unterzogen. Im Anschluss an die Lagerung wurde nach der Prüfvorschrift ISO 179/1eU (Messung bei 23°C) die Charpy-Schlagzähigkeit gemessen. Das Ergebnis ist in Abbildung 2 dargestellt.

Aus Abbildung 2 ist ersichtlich, daß das gemäß Vergleichsbeispiel 1 hergestellte Polymer eine größere Änderung der Charpy-Schlagzähigkeit aufweist als das gemäß Beispiel 1 erhaltene.

Zudem weist das gemäß Vergleichsbeispiel 1 hergestellte Polymer eine geringere Charpy-Schlagzähigkeit auf als das gemäß Beispiel 1 erhaltene.

## Patentansprüche

1. Verfahren zur Herstellung von Polyamiden, **dadurch gekennzeichnet, daß** man die Polymerisation von Startmonomeren in der Gegenwart von 2,3 bis 10 mmol, bezogen auf 1 mol Carboxamid-Gruppe des Polyamids, einer Verbindung, die eine Nitrilgruppe und eine zur Bildung einer Carboxamidgruppe fähige funktionelle Gruppe aufweist, als Kettenregler durchführt.

2. Verfahren nach Anspruch 1, wobei man als Verbindung, die eine Nitrilgruppe und eine zur Bildung einer Carboxamidgruppe fähige funktionelle Gruppe aufweist, ein Aminonitril einsetzt.

3. Verfahren nach Anspruch 1, wobei man als Verbindung, die eine Nitrilgruppe und eine zur Bildung einer Carboxamidgruppe fähige funktionelle Gruppe aufweist, eine Nitrilocarbonsäure einsetzt.

4. Polyamid, erhältlich, insbesondere erhalten, nach einem Verfahren gemäß den Ansprüchen 1 bis 3.

5. Polyamid, enthaltend eine über eine Carboxamidgruppe chemisch an die Polymerkette gebundene Verbindung, die eine Nitrilgruppe und eine zur Bildung einer Carboxamidgruppe fähige funktionelle Gruppe aufweist, in einer Menge im Bereich von 2,3 bis 10 mol, bezogen auf 1 mol Carboxamid-Gruppen des Polyamids.

6. Fäden, Fasern, Flächengebilde und Formkörper enthaltend, insbesondere bestehend aus,' Polyamid gemäß Anspruch 4 oder 5.

## Claims

1. A process for preparing polyamides, which comprises polymerizing starting monomers in the presence of from 2.3 to 10 mmol, based on 1 mol of carboxamide group of the polyamide, of a compound comprising a nitrile group and a functional group capable of forming a carboxamide group as chain regulator.

2. The process according to claim 1 wherein said compound comprising a nitrile group and a functional group capable of forming a carboxamide group is an aminonitrile.

3. The process according to claim 1 wherein said compound comprising a nitrile group and a functional group capable of forming a carboxamide group is a nitrilocarboxylic acid.

4. Polyamide obtainable, especially obtained, by a process according to any of claims 1 to 3.

5. The polyamide comprising, chemically bonded to the polymer chain via a carboxamide group, in an amount in the range from 2.3 to 10 mol, based on 1 mol of carboxamide groups of the polyamide, a compound comprising a nitrile group and a functional group capable of forming a carboxamide group.

6. Filament, fiber, sheet or molding comprising, specifically consisting of, polyamide according to claim 4 or 5.

## Revendications

1. Procédé de préparation de polyamides, **caractérisé en ce que** l'on entreprend la polymérisation de monomères de départ en présence de 2,3 à 10 mmoles, par rapport à 1 mole de groupes carboxamide du polyamide, d'un composé présentant un groupe nitrile et un groupe fonctionnel capable de former un groupe carboxamide, en tant que régulateur de chaîne.

2. Procédé suivant la revendication 1, dans lequel on met en oeuvre, en tant que composé présentant un groupe nitrile et un groupe fonctionnel capable de former er un groupe carboxamide, un aminonitrile.

3. Procédé suivant la revendication 1, dans lequel on met en oeuvre, en tant que composé présentant un groupe nitrile et un groupe fonctionnel capable de former un groupe carboxamide, un acide nitrilocarboxylique.

4. Polyamide, que l'on peut obtenir, en particulier obtenu, par un procédé suivant les revendications 1 à 3.

5. Polyamide, contenant un composé chimiquement lié à la chaîne polymère via un groupe carboxamide, qui présente un groupe nitrile et un groupe fonctionnel capable de former un groupe carboxamide, en une quantité de 2,3 à 10 moles, par rapport à 1 mole de groupes carboxamide du polyamide.

6. Fils, fibres, articles plats et corps moulés contenant, en particulier consistant en polyamide suivant les revendications 4 ou 5.
